# EUROPEAN PATENT APPLICATION

(11) **EP 1 010 903 A1**
(43) Date of publication of application: **21.06.2000**
(21) Application number: 98123480.0
(22) Date of filing: 14.12.1998
(51) Int. Cl.: F16C 11/06

(54) **Dust cover for ball joint**

(71) Applicant: Musashi Seimitsu Kogyo Kabushiki Kaisha, Toyohashi-Shi, Aichi-Ken (JP)
(72) Inventor: Hamaguchi, Yasunori, Okazaki-Shi, Aichi-Ken (JP); Tsuji, Tatsuyoshi, Atsumi-Gun, Aichi-Ken (JP); Yokoyama, Tokuji, Shinshiro-Shi, Aichi-Ken (JP); Murakami, Hiroyuki, Toyohashi-Shi, Aichi-Ken (JP)
(74) Representative: Liesegang, Roland, Dr.-Ing.

(57) **Abstract**

A dust cover (10) for use in combination with a ball joint comprises a small open end part (11), a large open end part (12) and a body part (14) extended between the small open end part (11) and the large open end part (12) and bulging radially outward. The large open end part (12) has a holding section (12f) and skirt section (12s) flaring from the holding section (12f) toward its free end. The skirt section (12s) has a substantially uniform thickness (s) greater than the thickness (t) of the holding section (12f). The holding section (12f) of the large open end part (12) has a circumferential contact surface (12n) provided with annular lips (12p). The skirt section (12s) having the great thickness s is unable to slip through the space between a circlip (40) and the bottom surface (32b) of the dust cover holding groove (32) of the socket (30). The annular lips (12p) are effectively compressed by the fastening force of the circlip (40) to secure a high sealing joint.

## Description

### Field of the Invention

The present invention relates to a dust cover for protecting a ball joint included in, for example, an automotive suspension system or an automotive steering system.

### Description of the Related Art

Prior art dust covers for protecting ball joints are disclosed in, for example, JP-U Nos. 61-38374 and 63-30618. Such a dust cover is used for a ball joint comprising a ball stud having a stem and a spherical head, and a socket having a hollow for slidably receiving the spherical head of the ball stud therein and a dust cover holding groove in an outer circumference thereof. The dust cover has a small open end part to be fitted on the stem of the ball stud, and a large open end part to be fitted in the dust cover holding groove formed in the outer circumference of the socket. The large open end part of the dust cover is fastened to the socket by the circlip.

As shown in Figs. 4 and 5, in a prior art dust cover 110, the thickness t' of a holding section 112f of a large open end part 112 is greater than or substantially equal to the thickness s' of a skirt section 112s of the same. When a ball stud 121 is tilted to one side of the dust cover 110 at a large angle as shown in Fig. 6, a part of the large open end part 112 on the other side of the dust cover 110 is pulled by the tilted ball stud 121. If a pulling force exerted on the dust cover 110 by the ball stud 121 exceeds a fastening force exerted by a circlip. 40, the skirt 112s of the large open end part 112 may slip through a space between the circlip 40 and surfaces defining a dust cover holding groove 132 in the socket 130. This means that the large open end part 112 of the dust cover 110 comes off the socket 130, so that the protective function of the dust cover 110 is lost.

The inner circumference 112n of the large open end part 112 in contact with the bottom surface of the dust cover holding groove 132 is flat and hence the sealing effect of the large open end part 112 of the dust cover 110 is not necessarily perfectly satisfactory.

### DISCLOSURE OF THE PRESENT INVENTION

Accordingly, it is an object of the present invention to provide a dust cover for a ball joint, having a large open end part which will not come off the socket of the ball joint even if the ball stud of the ball joint is tilted at large angles, and capable of maintaining a high sealing ability for an extended period of use.

According to one aspect of the present invention, a dust cover for use in combination with a ball joint comprising a ball stud having a stem and a spherical head, and a socket provided with a hollow for slidably receiving the spherical head of the ball stud and an annular groove in an outer circumference thereof, said dust cover comprising: a first open end part fitted on the stem of the ball stud; and a second open end part fitted in the annular groove of the socket, said second open end part being fastened to the socket with a circlip; is characterized in that the second open end part has a holding section having a circumferential contact surface provided with annular lip means to be pressed against a bottom surface of the annular groove of the socket, and a skirt section flaring from the holding section toward a free end thereof and having a thickness greater than that of the holding section.

### BRIEF DESCRIPTION OF THE DRAWINGS

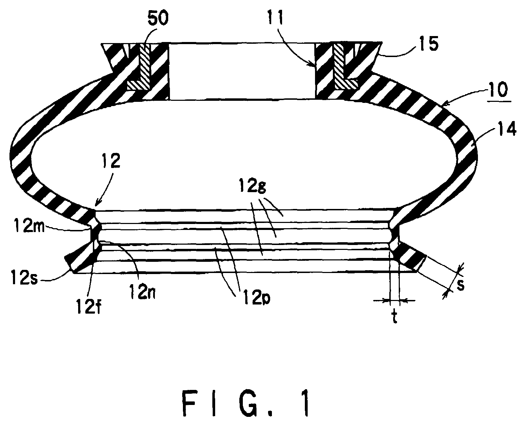

Fig. 1 is a longitudinal sectional view of a dust cover in a preferred embodiment according to the present invention;

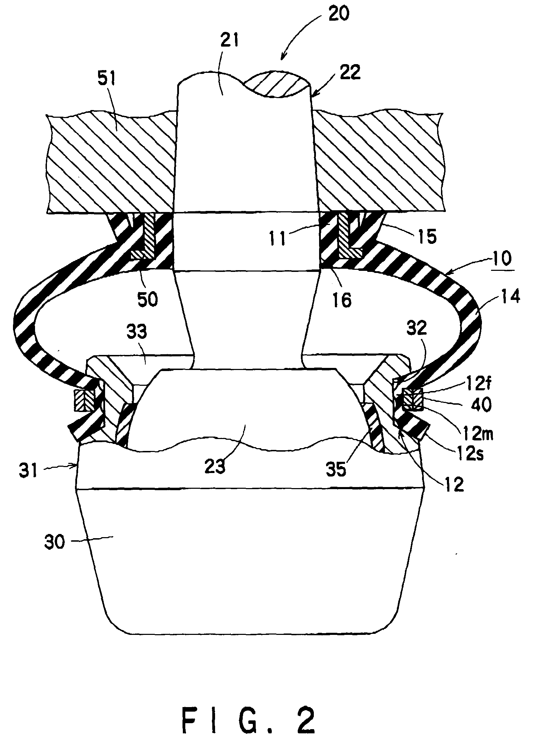

Fig. 2 is a longitudinal sectional view of the dust cover of Fig. 1 as put on a ball joint;

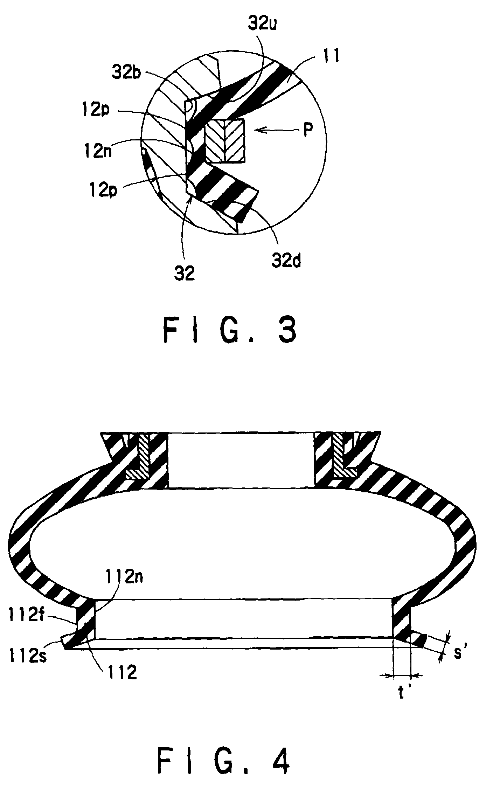

Fig. 3 is an enlarged fragmentary sectional view of a portion of Fig. 2 around an annular groove;
Fig. 4 is a longitudinal sectional view of a prior art dust cover for a ball joint;

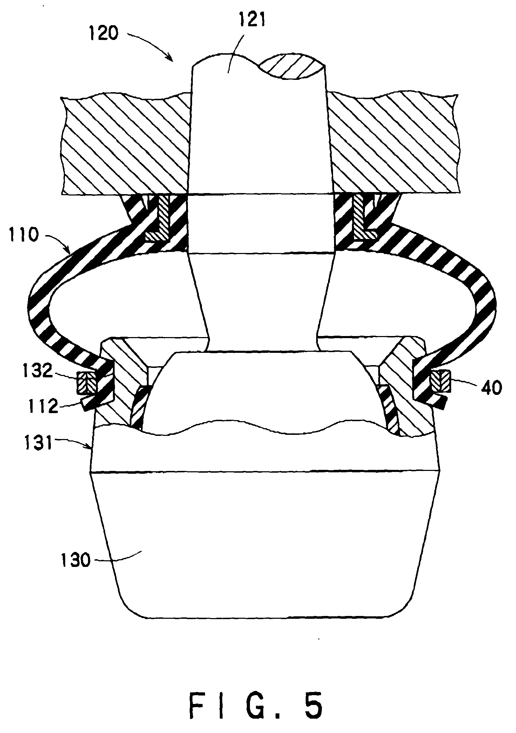

Fig. 5 is a longitudinal sectional view of the dust cover of Fig. 4 as put on a ball joint; and

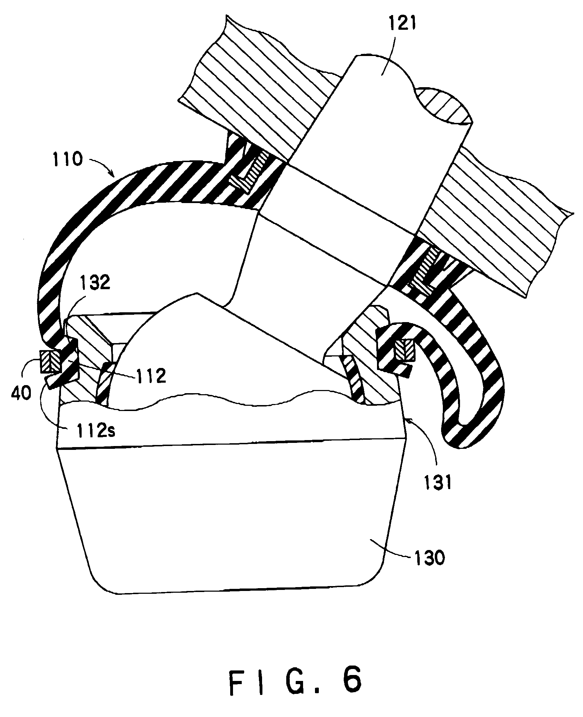

Fig. 6 is a partly cutaway front view of a ball joint covered with a prior art dust cover in a state where the ball stud of the ball joint is tilted to one side at a large angle.

### DESCRIPTION OF THE PREFERRED EMBODIMENTS

Fig. 1 shows a dust cover 10 in a preferred embodiment according to the present invention. Fig. 2 shows a ball joint 20 covered with the dust cover 10 of Fig. 1. The ball joint 20 comprises a ball stud 21 having a stem 22 and a spherical ball head 23, and a socket 30 provided with an annular dust cover holding groove 32.

As shown in Fig. 1, The dust cover 10 is formed of an elastic material, such as urethane rubber, in a shape substantially resembling a bell having a substantially cylindrical part. The dust cover 10 has a lower, large open end part 12, an upper, small open end part 11, and a body part 14 extending between the large open end part 12 and the small open end part 11 and bulging radially outward.

The large open end part 12 has a holding section 12f to be fitted in the annular dust cover holding groove 32 of the socket 30 of the ball joint 20, and a skirt section 12s flaring from the holding section 12f toward its free end. The skirt section 12s has a substantially uniform thickness s, which is greater than the thickness t of the holding section 12f.

As shown in Fig. 1, two annular lips 12p and three annular grooves 12g are formed in axially perpendicular arrangements in a circumferential contact surface 12n i.e. the inner surface of the holding section 12f of the large open end part 12 of the dust cover 10. Each annular lip 12p has a triangular cross section.

A reinforcing ring 50 is embedded in the small open end part 11. An outer annular lip 15 is formed on the small open end part 11. The circular outer lip 15 is capable of coming into close contact with a connecting member 51, such as a knuckle arm, to secure a sealed joint.

Referring to Fig. 2, the ball joint 20 comprises the ball stud 21 having a stem 22 and a spherical ball head 23 formed in one end of the stem 22, and the socket 30 provided with a hollow. The spherical head 23 is slidably supported in a bearing 35 in the hollow of the socket 30. The stem 22 of the ball stud 21 projects from the open end 33 of the socket 30.

The small open end part 11 of the dust cover 10 is fitted on the stem 22 of the ball stud 21 with the outer lip 15 in close contact with the connecting member 51, such as a knuckle arm, to secure a sealed joint.

The large end part 12 of the dust cover 10 is fitted in the dust cover holding groove 32 formed in the outer circumference 31 of the socket 30 near the open end 33.

As shown in Fig. 3, the dust cover holding groove 32 has a circular shape complementary to the shape of the large open end part 12 of the dust cover 10 and is defined by a bottom surface 32b and two opposite side surfaces 32u and 32d. The side surfaces 32u and 32d are not parallel and are inclined so that the dust cover holding groove 32 expands radially outward.

The large open end part 12 of the dust cover 10 is fastened to the socket 30 of the ball joint 20 with a circlip 40. The circlip 40 is formed of a suitable material, such as a metal or the like, in a spiral or helical shape. When the circlip 40 is put on the outer circumference 12m of the large open end part 12 of the dust cover 10, the diameter of the circlip 40 in a natural state is increased to fasten the large open end part 12 of the dust cover 10 fitted in the dust cover holding groove 32 to the socket 30.

In this state, the annular lips 12p formed on the circumferential contact surface 12n of the dust cover 10 are compressed radially and are pressed against the bottom surface 32b of the dust cover holding groove 32 of the socket 30 by the fastening force of the circlip 40. As mentioned above, since the annular lips 12p are formed in an axially middle section of the circumferential contact surface 12n of the large open end part 12 of the dust cover 10 instead of the axially opposite end sections of the same, the fastening force of the circlip 40 can effectively be applied to the annular lips 12p.

When the ball stud 21 of the ball joint 20 thus covered with the dust cover 10 is tilted at a large angle to one side, a part of the large open end part 12 of the dust cover 10 on the other side is pulled by the tilted ball stud 21 in a direction in which the ball stud 21 is tilted. Since the skirt section 12s has a substantially uniform thickness s greater than the thickness t of the holding section 12f bearing the fastening force of the circlip 40, the skirt section 12s of the thickness s greater than the thickness t of the holding section 12f is unable to slip through the space between the circlip 40 and the bottom surface 32b of the dust cover holding groove 32 of the socket 30; that is, the dust cover 10 is unable to come off the socket 30.

The annular lips 12p are effectively compressed by the fastening force of the circlip 40 to secure a high sealing joint.

The opposite side surfaces of the holding section 12f of the dust cover 10 are inclined so as to diverge radially outward from each other, and the side surfaces 32u and 32d of the dust cover holding groove 32 are inclined accordingly. Therefore, as shown in Fig.3, when the fastening force P of the circlip 40 is applied to the large open end part 12, the large open end part 12 is pressed firmly against the bottom surface 32b and the side surfaces 32u and 32d of the dust cover holding groove 32 by a wedge effect to secure a high sealing joint.

Although the circumferential contact surface 12n of the large open end part 12 of the dust cover 10 is provided with the two annular lips 12p in this embodiment, the circumferential contact surface 12n may be provided with any suitable number of annular lips. The respective inclinations of the side surfaces 32u and 32d of the dust cover holding groove 32 to the bottom surface 32b of the same may be equal to or different from each other.

## Claims

1. A dust cover (10) for use in combination with a ball joint (20) comprising a ball stud (21) having a stem (22) and a spherical head (23), and a socket (30) provided with a hollow for slidably receiving the spherical head of the ball stud and an annular groove (32) in an outer circumference thereof, said dust cover comprising:
a first open end part (11) fitted on the stem of the ball stud; and
a second open end part (12) fitted in the annular groove of the socket, said second open end part being fastened to the socket with a circlip (40);
characterized in that the second open end part has a holding section (12f) having a circumferential contact surface (12n) provided with annular lip means (12p) to be pressed against a bottom surface of the annular groove of the socket, and a skirt section (12s) flaring from the holding section toward a free end thereof and having a thickness (s) greater than that (t) of the holding section.

2. The dust cover according to claim 1, wherein the thickness of the skirt section is substantially uniform.

3. The dust cover according to claim 1, wherein a body part (14) bulging radially outward is extended between the first open end part and the second open end part.

4. The dust cover according to claim 3, wherein opposite side surfaces (32u, 32d) of the second open end part extend so as to diverge radially outward from each other.

5. The dust cover according to claim 1, wherein the annular lip means comprises two annular lips, and the two annular lips are formed in an axially middle part of the circumferential contact surface of the holding section of the second open end part.
